# EUROPEAN PATENT SPECIFICATION

(11) **EP 3 802 976 B1**
(45) Date of publication and mention of the grant of the patent: **27.08.2025**
(21) Application number: 19815923.8
(22) Date of filing: 04.06.2019
(51) Int. Cl.: E04B 1/04, E04G 15/06

(54) **A CONNECTING DEVICE AND FORMWORK ASSEMBLY FOR CONNECTING ASSEMBLIES OF PANELS**
VERBINDUNGSVORRICHTUNG UND SCHALUNGSANORDNUNG ZUM VERBINDEN VON PLATTENANORDNUNGEN
DISPOSITIF DE LIAISON ET ENSEMBLE COFFRAGE POUR RELIER DES ENSEMBLES DE PANNEAUX

(30) Priority: 06.06.2018 AU 2018902034
(43) Date of publication of application: 14.04.2021
(73) Proprietor: Hagane Pty Ltd, Keilor Park, VIC 3042 (AU)
(72) Inventor: CILIA, Robert, Southbank, VIC 3006 (AU)
(74) Representative: Keil & Schaafhausen Patentanwälte PartGmbB
(86) International application number: PCT/AU2019/000072
(87) International publication number: WO 2019/232567

(56) References cited:
- AU-B2- 2009 217 422
- CA-A1- 2 839 486
- FR-A- 1 101 308
- US-A- 4 030 262
- US-A- 4 781 006
- US-A1- 2016 258 163
- US-A1- 2017 081 838
- US-B1- 6 698 150
- US-B2- 7 975 444
- US-B2- 9 399 867

## Description

### FIELD OF THE INVENTION

This International Patent Application claims priority to Australian provisional application no. 2018902034 filed on 6 June 2018.

This invention relates to a system for connecting assemblies of panels.

### BACKGROUND OF THE INVENTION

Pre-cast concrete components are a construction product which is manufactured by casting settable material, such as concrete, in a mould or "form". Once the settable material has set, the concrete components can then be transported to a construction site and lifted into place. Pre-cast assembly can enable rapid completion of commercial buildings with minimal labour and typically with greater control over quality and workmanship as opposed to pouring into custom built forms on site.

These concrete components include pre-cast panels which are used to form interior and exterior walls of buildings, to clad all or part of a building fa9ade, or to be used as freestanding walls as security or sound-proofing barriers, or even landscaping features.

Once the pre-cast panels are on site, they must be assembled together to form the building or other construction. Cast-in plates are generally used to join the pre-cast panels together. The pre-cast panel is formed by casting concrete with the cast-in plates adjacent to a side of the panel which is to be joined. By welding or bolting a connection piece to two adjacent cast-in plates, the panels are thus joined together.

However this method of assembling concrete panels is costly and labour-intensive as it requires a construction worker to be lifted in a cherry picker to weld or bolt the cast-in plates together. Generally the connection piece and cast-in plates are then covered in additional settable material. It has been observed by the applicant that this connection is often considered unsightly, and this additional material once set has the propensity to crack which renders the panels even more unsightly.

Examples of the invention seek to solve or at least ameliorate one or more disadvantages of previous assembly and methods of joining pre-cast panels.

A wall system and a concrete panel corner connection are known from US 9 399 867 B2.

The above references to and descriptions of prior proposals or products are not intended to be, and are not to be construed as, statements or admissions of common general knowledge in the art. In particular, the above prior art discussion does not relate to what is commonly or well known by the person skilled in the art, but assists in the understanding of the inventive step of the present invention of which the identification of pertinent prior art proposals is but one part.

### SUMMARY OF THE INVENTION

The problem indicated above is solved by a system for connecting an assembly of panels with the features according to claim 1. It comprises, inter alia, a connecting device for connecting an assembly of adjacent panels, wherein the connecting device has a body comprising at least two portions (i.e. the at least two arm members), each portion (i.e. the at least two arm members) having means for anchoring the connecting device (i.e. the at least two leg members) into a respective recess in one of the panels of the assembly, which, when the panels are so assembled, the connecting device is receivable in a void formed by the recesses of the panels thereby joining the panels together and wherein the connecting device is configured to selectively connect an assembly of two, three or more panels.

The connecting device is configured to be substantially wholly receivable within the void. Especially, the connecting device may have a planar upper surface that is configured to be wholly received within the void.

According to an embodiment, the leg members extend laterally away from the body of the connecting device.

According to an embodiment, the body of the connecting device comprises opposing end portions of a beam for connecting a pair of panels positioned in edge-to-edge configuration thereby forming a panel of extended dimension, such as height or length.

According to an embodiment, at least two arm members of the connecting device are arranged to extend at right angles from one another for forming an assembly of panels having a substantially right angled corner.

Preferably, at least one of the arm members of the connecting device has a pair of leg members, each leg member of said pair extending in opposite directions laterally from the body of the connecting device and being receivable in recesses of two adjacent panels where the panels are arranged on opposite sides of the at least one arm member of the connecting device thereby connecting those two panels to form a panel of extended dimension, such as length.

The system can comprise a formwork assembly for forming the recess in a panel cast in a mould formed by framework defining a periphery thereof, the framework configured to form one of the pre-cast concretes panels once it has been cast, set and erected, the formwork assembly configured to form the recess in the pre-cast concrete panel to receive a portion (arm member) of the connecting device as described above, wherein, when the pre-cast concrete panels are so assembled that the recesses form the void for receiving the connecting device which is configured to selectively connect assemblies of two, three, four or more panels.

According to an embodiment, the formwork assembly has an elongate form element and at least one anchor form element extending laterally therefrom, wherein the elongate form element and at least one anchor form element are configured to receive the portion (i.e. the arm member) of the connecting device.

Preferably, the or each anchor form elements is of tubular form for receiving at least a part of the connecting device. More specifically, the part of the connecting device is one of the leg members.

According to an embodiment, when the panel has been cast and set and erected into an upright position, the elongate form element is removable to allow the connecting device to be engagingly received in the void.

Preferably, the or each elongate form elements comprises solid foam, polymer or timber material.

In a more preferred embodiment, the formwork assembly is the form of a container, wherein, when the panel has been cast and set and erected into an upright position, wherein the container forms at least part of the void for engagingly receiving one of the portions of the afore-mentioned connecting device.

The or each anchor form element or container can be pre-fillable with settable material and having a sealing element at an open end thereof to contain the settable material, wherein the seal is removable or piercable to allow the connecting device to be engagingly received therein. The container can be formed of polymer or metallic material.

The system according to the invention is for connecting the assembly of adjacent panels, the system inter alia having: The connecting device having the body comprising at least two portions (namely arm members), each portion having means (namely at least two leg members) for anchoring the connecting device into one of the panels; optionally, formwork assembly for forming the void (the recesses) in adjacent portions of each of the panels of the assembly, each recess being arranged to engagingly receive one of the associated portions (i.e. arm members) of the connecting device; wherein, when the panels are so assembled, the connecting device is engagedly received in the void formed by the recesses of the assembled adjacent panels; and wherein the configuration of connecting device and the recesses is such that the connecting device is able to selectively connect an assembly of two, three or more panels.

According to a fourth aspect of the present disclosure, said aspect not forming part of the invention as literally defined in the claims, there is provided a method for connecting an assembly of adjacent panels, the method having the steps of: preparing framework for casting at least two panels, the framework having at least one formwork assembly for providing a recess in each panel for receiving respective portions of a connecting device; casting the panels and erecting them in a pre-defined assembly such that recesses of adjacent panels form a void for engagingly receiving the connecting device therein; connecting the panels together by inserting the connecting device into the void to assemble the panels together.

The at least one formwork assembly may be hollow to allow one of the portions of the connecting device to be engagedly received therein and filling at least part of the at least one formwork assembly with settable material before inserting the connecting device.

In an embodiment, at least part of the at least one formwork assembly is filled with settable material before casting the panel.

The at least one formwork assembly can have a sealing element to contain the settable material and preventing the settable material from setting until the sealing element is removed or pierced.

Preferably, the connecting device or formwork assembly or system or method as described above is used for connecting a panel assembly where the panels are upright.

### BRIEF DESCRIPTION OF THE DRAWINGS

The present invention will now be described, by way of non-limiting example, with reference to the accompanying drawings in which:
Figs 1 and 2 are cross-section and top views of a pair of adjacent panels having recesses formed by formwork assemblies; and
Figs 3 and 4 are side and top views of the panels of Figs 1 and 2 being joined by a connecting device received in the void formed by the recesses;
Figs 5 and 6 are side and bottom views of the connecting device of Figs 3 and 4;
Fig 7 is a vertical cross-section partial view of two formwork assemblies used to form the two recesses in one of the panels of Figs 1 and 2 when it is being cast;
Fig 8a is a top view of a pair of adjacent panels arranged at right angles laterally to each other;
Fig 8b is a top view of the panels of Fig 8a being joined by a connecting device according to another preferred embodiment;
Fig 9 is a top view of the connecting device of Fig 8b;
Figs 10a and 10b are top and side views respectively of a first formwork assembly used to form a first recess in a first panel of Figs 8a and 8b;
Figs 10c and 10d are top and side views of a second formwork assembly used to form a second recess in a second panel of Figs 8a and 8b;
Fig 11a is a top view of a connecting device according to yet another preferred embodiment of the present invention;

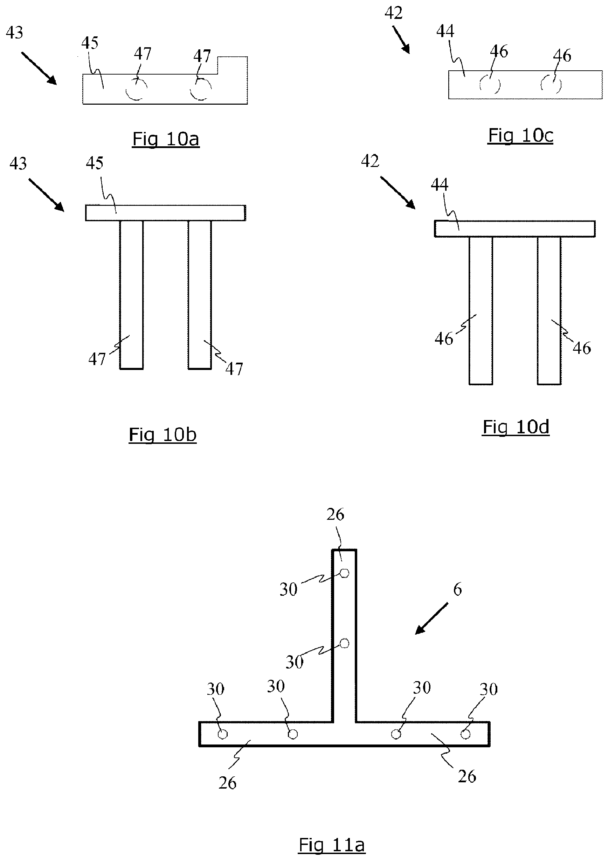

Fig 11a is a top view of three adjacent panels;

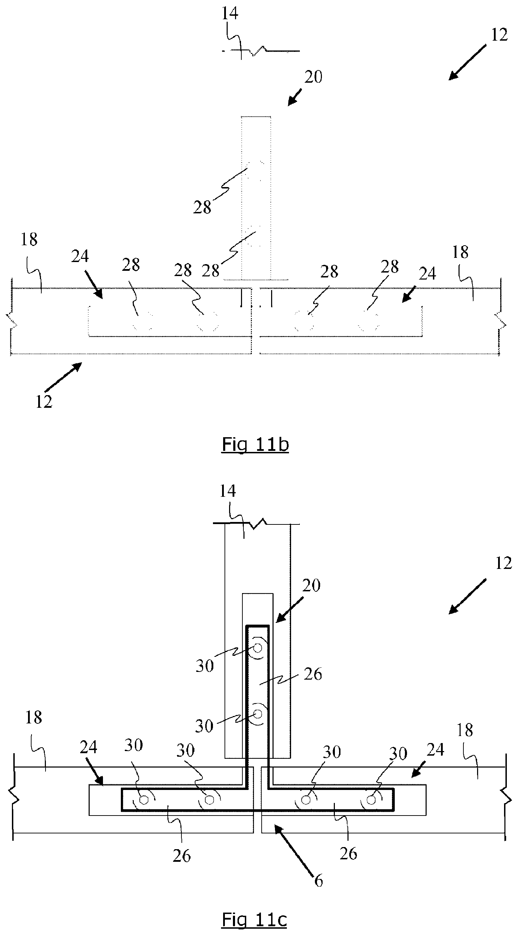

Fig 11c is a top view of the panels of Fig 10 being joined by the connecting device of Fig 11a;

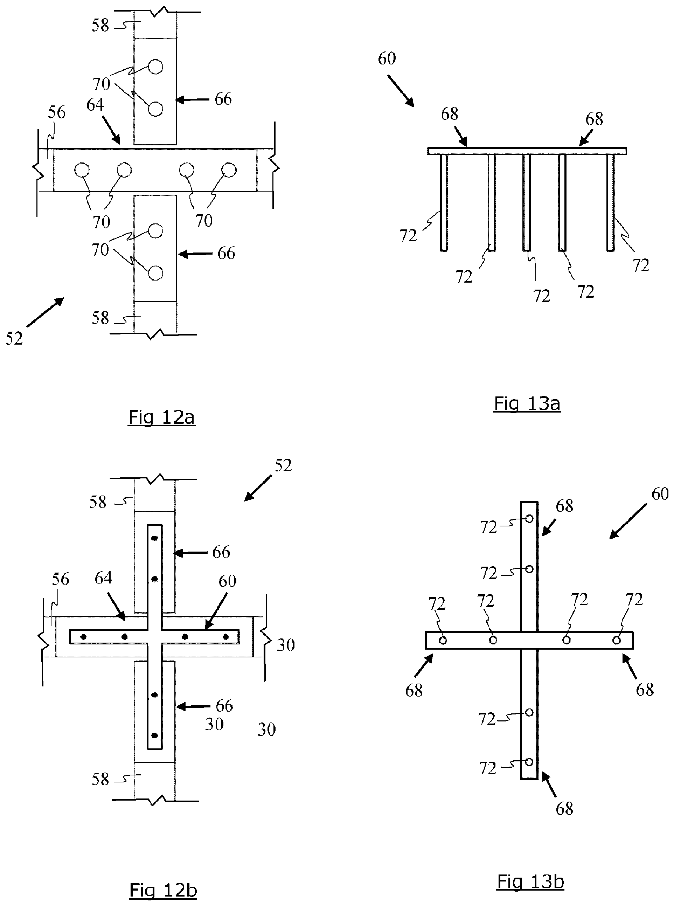

Figs 12a and 12b are top views of three adjacent panels in an alternative arrangement joined by a connecting device according to a further preferred embodiment of the present invention;
Figs 13a and 13b are side and top views respectively of the connecting device of Fig 12a and 12b;

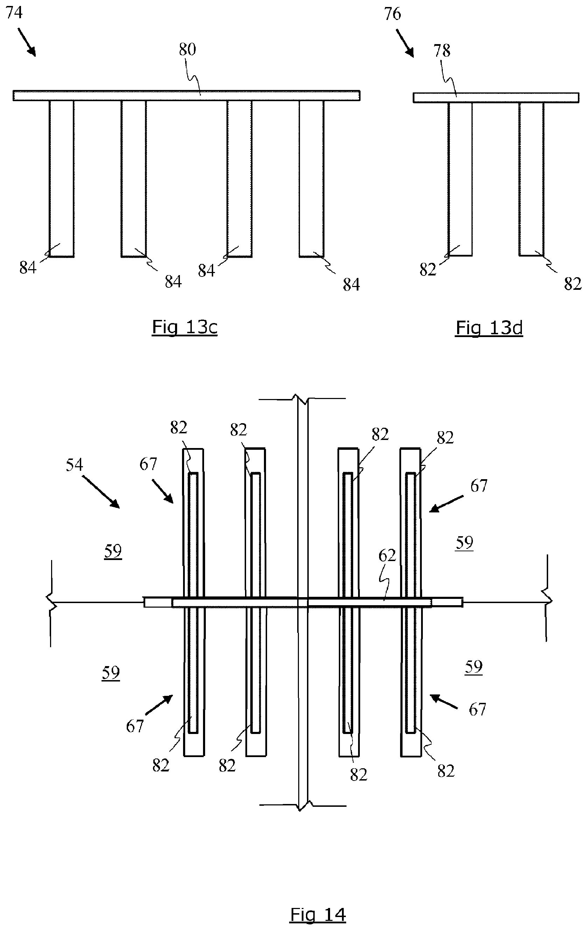

Fig 13c is a side view of a first formwork assembly for forming a recess in a first panel for receiving a first portion of the connecting device of Figs 13a and 13b;
Fig 13d is a side view of a second formwork assembly for forming recesses in the second and third panels for receiving portions of the connection device of Figs 13a and 13b;
Fig 14 is a vertical cross-section view showing four panels to form a larger panel of extended height and width being joined by a connecting device according to a yet further preferred embodiment of the present invention;

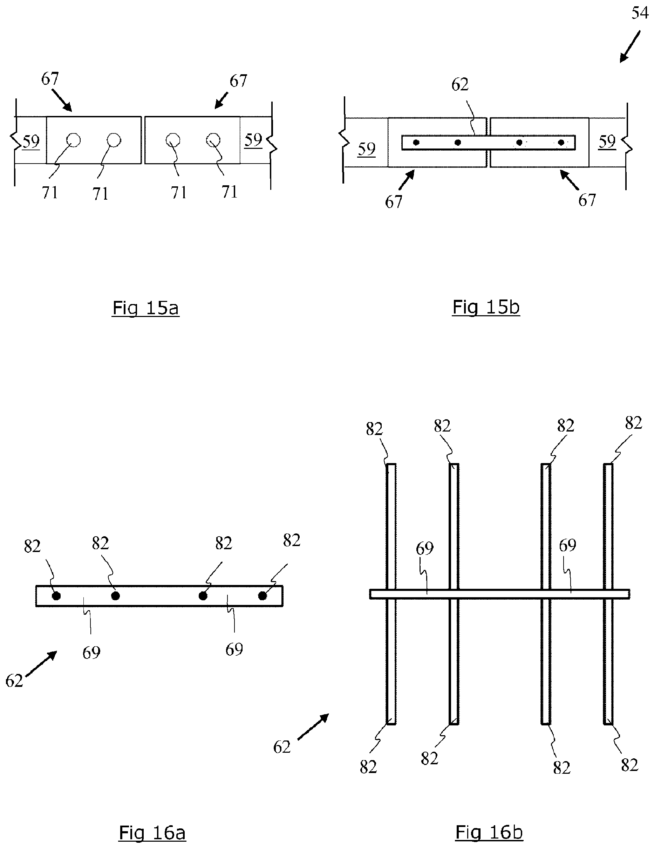

Figs 15a and 15b are horizontal cross-section views of the panels with and without the connecting device respectively; and
Figs 16a and 16b are top and side views of the connecting device of Figs 14, 15a and 15b.

### DETAILED DESCRIPTION OF THE INVENTION

Preferred features of the present invention will now be described with particular reference to the accompanying drawings. However, it is to be understood that the features illustrated in and described with reference to the drawings are not to be construed as limiting on the scope of the invention as defined by the appended claims.

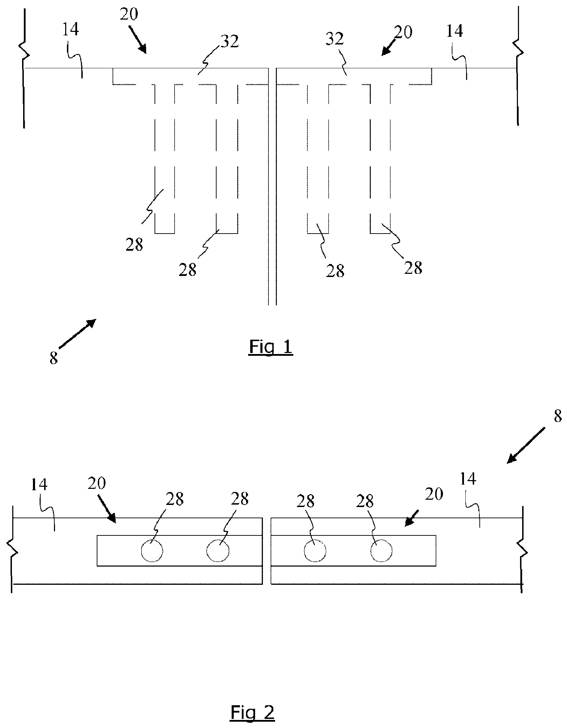

Figs 1 to 16b are various views illustrating the use of a connecting device 2, 4, 6, 60, 62 for joining various assemblies 8, 10, 12, 52, 54 of adjacent panels 14, 16, 18, 56, 58, 59 according to preferred embodiments of the present invention. The panels 14, 16, 18, 56, 58, 59, in these examples, are precast concrete panels which are typically cast in horizontally oriented formwork and then once set are removed to a construction site where they are generally erected into an upright configuration to form arrangements of interior or exterior walls of a building. It will appreciated by a person skilled in the art that other types of panels formed of settable material could also be used in these embodiments.

In general, as illustrated in Figs 1 to 16b, the upwardly directed faces of the upright panels 14, 16, 18, 56, 58, 59 have recesses 20, 22, 24, 64, 66, 67. The recesses 20, 22, 24, 64, 66, 67 are configured to receive a respective portion of the connecting device 2, 4, 6, 60, 62. When the panels 14, 16, 18, 56, 58, 59 are positioned in a chosen arrangement, the recesses 20, 22, 24, 64, 66, 67 of the panels in the assembly collectively form a void which is shaped to engagingly receive the corresponding connecting device 2, 4, 6, 60, 62. In this way, various arrangements of panels 14, 16, 18, 56, 58, 59, are thereby connected together to easily and conveniently form interior or exterior walls of a building. The connecting device 2, 4, 6, 60, 62 advantageously connects the upright panels 14, 16, 18, 56, 58, 59 at their upwardly directed faces, so that the front and rear faces of the panels 14, 16, 18, 56, 58, 59 which are typically visible within or without the finished building, are un-marked and are thus aesthetically pleasing.

The recesses 20, 22, 24, 64, 66, 67 are formed by formwork assemblies 42, 43, 74, 76 have form elements 44, 45, 46, 47, 78, 80, 82, 84 which are configured to receive respective portions of the connecting device 2, 4, 6, 60, 62 as described above thereby joining the panel assemblies 8, 10, 12, 52, 54 together. In these examples, the formwork assembly or assemblies 42, 43, 74, 76 are placed within framework 48 before the process of forming or casting the concrete panels 14, 16, 18, 56, 58, 59. Then each panel 14, 16, 18, 56, 58, 59 is cast in a mould defined by the framework 48 which typically defines a periphery of the panel 14, 16, 18, 56, 58, 59.

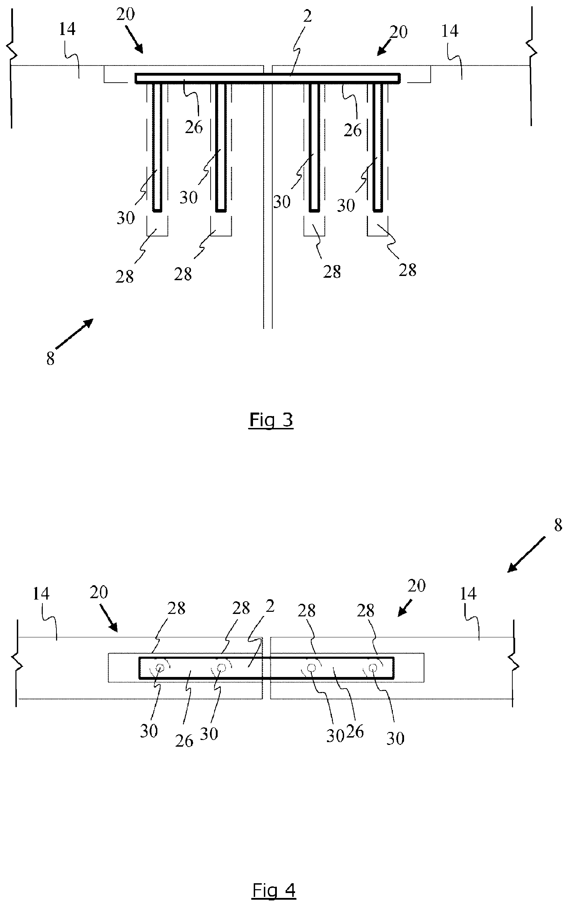

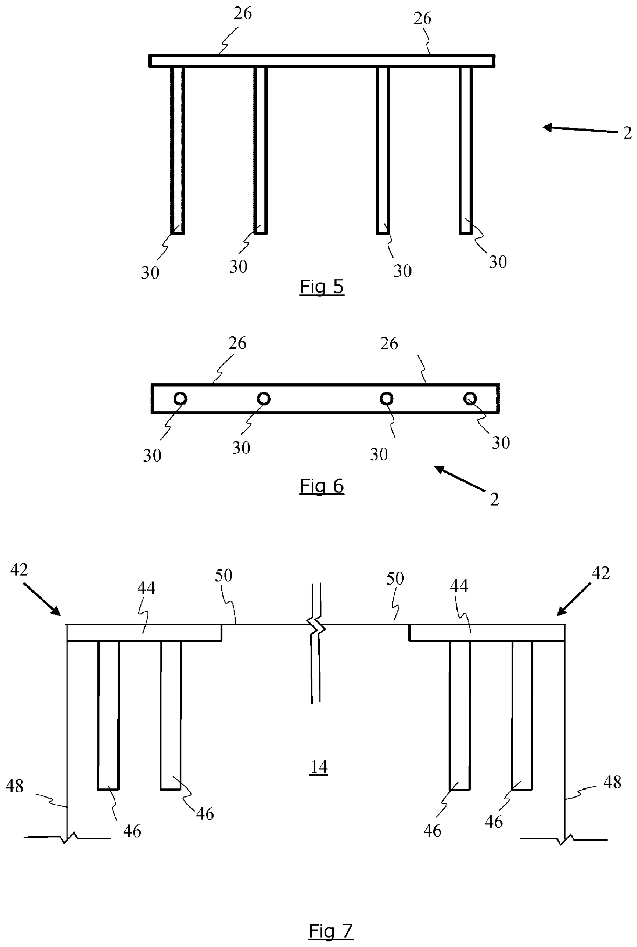

In the example illustrated in Fig 7, a pair of formwork assemblies 42 having form elements 44, 46 are provided at the opposing corners of an edge 50 of the framework 48. After the panel is cast, set and erected upright, the edge 50 will become the upwardly facing face of the panel 14. Each formwork assembly 42 comprises an elongate form element 44 which, when in use, is generally horizontally oriented, having laterally extending anchor form elements 46 which extend substantially away from the edge 50 of the panel 14, and where each elongate form element 44 is received in the corner portion of the framework 48. This ensures that adjacent recesses 20 form a void to receive the connecting device 2 completely therein in the two panels 14 when they are placed edge to edge as illustrated in Fig 3.

In one embodiment, the recesses 20, 22, 24, 64, 66, 67 can be formed by removing the formwork assemblies 42, 43, 74, 76. In a preferred embodiment, the formwork assemblies 42, 43, 74, 76 are defined as a hollow container arranged for engaging the respective portions of the connecting device 2, 4, 6, 60, 62. The recesses 20, 22, 24, 64, 66, 67 may also be filled or pre-filled with settable material, such as cement or concrete grout, such that when the connecting device 2, 4, 6, 60, 62 is received in the recesses 20, 22, 24, 64, 66, 67 of the adjacent panels and the grout has set, the panels 14, 16, 18, 56, 58, 59 are thereby rigidly and fixedly engaged together.

Each connecting device 2, 4, 6, 60, 62 has a body comprising portions in the form of arm members 26, 68, 69, each arm member 26, 68, 69 having at least one means for anchoring extending laterally therefrom. In some embodiments, each portion has one means for anchoring however preferably they may have two, as illustrated in Figs 14 and 16b. Each arm member 26, 68, 69 and its associated means for anchoring is engageably receivable in each of corresponding recesses 20, 22, 24, 64, 66, 67 of the panels 14, 16, 18, 56, 58, 59. The means for anchoring advantageously engage into the interior of each panel 14, 16, 18, 56, 58, 59 thereby preventing the panels 14, 16, 18, 56, 58, 59 from separating when so assembled, and especially so if the recesses of the panels are filled with set material.

Therefore the connecting device 2, 4, 6, 60, 62 can be configured such that it can selectively connect an assembly 8, 10, 12, 52, 54 of two, three or four panels 14, 16, 18, 56, 58, 59 where the recesses 20, 22, 24, 64, 66, 67 formed by the formwork assemblies 42, 43, 74, 76 form a void which can engagingly receive the connecting device 2, 4, 6, 60, 62 (see Figs 4, 8b, 11c, 12b and 14). Thus the connecting device 2, 4, 6, 60, 62 and formwork assemblies 42, 43, 74, 76 in differing combinations can be used to easily and conveniently assemble a variety of different numbers of panels together to provide arrangements of interior or external walls of a building. Consequently, the connecting device 2, 4, 6, 60, 62 and formwork assembly 8, 10, 12, 52, 54 used together advantageously reduces the labour involved and thus the time and cost of construction.

In the illustrated embodiments, the corresponding recess 20, 22, 24, 64, 66, 67 of each panel 14, 16, 18, 56, 58, 59 can comprise two or four spaced-apart vertical tubular portions 28, 70, 71 for engagingly receiving the means for anchoring which is defined in the embodiments as pairs of correspondingly spaced apart leg members 30, 72, 82. In the preferred embodiments shown, the leg members 30, 72, 82 are cylindrical and the vertical tubular portions 28, 70, 71 are correspondingly cylindrical for receiving them.

The connecting device 2, 4, 6, 60, 62 can be formed of metal typically used in construction, such as steel. The connecting device body comprising the arm members 26, 68, 69 and leg members 30, 72, 82, wherein the arm members and the leg members are formed integral to each other thereby forming a single unit which can be produced by metal casting and the like.

Notably, as illustrated in the Figs, the connecting device 2, 4, 6, 60, 62 is wholly receivable in the void formed by the recesses 20, 22, 24, 64, 66, for facilitating any further construction that may be planned such as roofing or addition of a further construction product such as another panel or panel assembly. Further, the assembly of panels 8, 10, 12, 52, 54 so connected has an aesthetic appearance and the front and rear faces of the panels, which are typically visible in the finished panel assembly, do not include any unsightly recesses, connecting devices or grout.

In particular, Figs 1 to 4 are side and top views of a preferred embodiment of the present invention where an upright panel 14 is joined to another like upright panel 14. The panels 14 are arranged to form an upright panel of extended length and which are configured to receive the connecting device 2 of Figs 5 and 6 in the void formed by the recesses 20 of the upwardly directed panel faces.

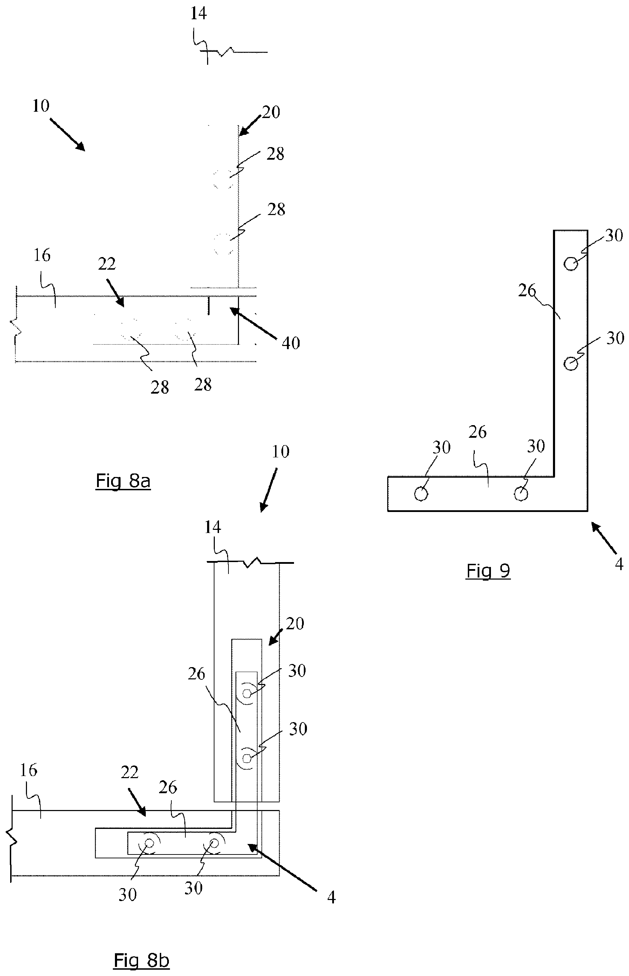

As an example of another preferred embodiment of Figs 8a to 10d, there is shown a pair of panels 14, 16 which are positioned adjacent to each other together at right angles, and where the recesses 20, 22 form a void in the form of an L-shape which can engagingly receive the connecting device 4 as illustrated in Fig 9. The recesses 20, 22 are formed during the casting process by use of the formwork assemblies 42, 43, as illustrated in Figs 10a to 10d, having form elements 44, 45, 46, 47.

Figs 11a to 11c similarly show another embodiment having an assembly 12 of three panels 14, 18 where the recesses 20, 24 form a void in the form of an T-shape which can engagingly receive the connecting device 6 as illustrated in Fig 11c similar to those described above. In a similar way, the recesses 20, 24 are formed during the casting process by the formwork assemblies similar to those illustrated in Figs 10a to 10d.

Figs 12a to 13d illustrate yet another embodiment being in the form of a three-panel assembly 52 of a pair of panels 58, which extend laterally on opposite sides of a third panel 56 and which are connected by the use of connecting device 60 received in the void defined by recesses 64, 66 formed during the casting process by formwork assemblies 42, 74. In particular, the connecting device 60 has four arm members 68, each arm member 69 extending laterally from another arm member 68, thereby forming a cross-shape as illustrated in Fig 13b.

In another preferred arrangement illustrated in Figs 14 to 16b, there is shown four panels 59 which are connected together to form a panel assembly 54 of extended length and height. The recesses 67 when the panels 59 are assembled again form a void which can engagingly receive the connecting device 62. The connecting device 62 has two arm members where each arm member 69 has two means for anchoring for engaging a pair of panels 59, each means for anchoring extending in opposing directions from each arm member 69. Therefore the connecting member 62 is able to connect an assembly 54 of four panels 59, where each panel 59 is connected vertically and horizontally to two like panels 59. The recesses 67 in each panel 59 are formed by a formwork assembly similar to that illustrated in Fig 13d.

The embodiments can be used to join various arrangements of upright precast concrete panels for constructing a commercial building or the like. In particular, the example arrangements include a pair of adjacent panels placed end to end and side-by-side (Figs 1 to 4), a pair of panels arranged orthogonally from each other so as to form a corner (Figs 8 and 9), arrangements of three panels (Figs 10 and 11) and configuration of four panels oriented in a plane to form a larger panel (Fig 14). It will be appreciated that these are example arrangements only and that the present invention can be modified to connect further arrangements of two, three, four or more upright panels, or even upright panels to another structure (not illustrated here), or even to provide arrangements of panels where at least one panel is not upright, for example the panel being a floor panel.

The elongate form elements 44, 45, 78, 80 can be defined as a generally rectangular block in the preferred embodiment shown in Figs 1 to 7. The block can be made from foam, for example polystyrene, metal, polymer material or timber material, though any suitable material could also be utilised as would be appreciated by a person skilled in the art.

In particular the elongate form element 44, 45, 78, 80 is provided such that it is apart from the bottom surface of the formwork 48 such that when the panel has been cast, set and erected, the elongate form element 44, 4578, 80 is removable to form the recesses 20, 22, 24, 64, 66, 67. In some embodiments illustrated in Figs 12a, 12b, 15a, 15b, the elongate form element 44, 45, 78, 80 may have a width substantially the same as the width of the panel 56, 58, 59 in which it is received. The panels can be of any thickness however it is preferred that the panels have thicknesses of 150 mm, 175 mm or 200 mm, and the elongate form element 44, 45, 78, 80 may have varying widths to accommodate the thickness of the panels.

The formwork assemblies 42, 43, 74, 76 have anchor form elements 46, 47, 82, 84 which are configured to engagingly receive the leg members 30, 72, 82. These anchor form elements 46, 47, 82, 84 which are defined in the embodiments as spaced apart hollow tubes or grout tubes which can be filled with a settable material which includes cement having sand or other aggregates.

In a more preferred embodiment, the formwork assemblies 42, 43, 74, 76 can be in the form of a container which is configured to define the recesses in the panels during casting, and which can engagingly receive the connecting device 2, 4, 6, 60, 62. The container can comprise polymer or metallic material, and has an opening by which the connecting device 2, 4, 6, 60, 62 or settable material can be inserted. The container which defines the outer perimeter of the elongate form element 44, 46, 78, 80 and anchor form elements 46, 47, 82, 84 can be integrally formed in a single unit, for example, by injection moulding. Alternatively, the elongate form element 44, 46, 78, 80 and anchor form elements 46, 47, 82, 84 can be provided separately and attached together by welding, fasteners or glue to form the container. In a more preferred embodiment, the anchor form elements 46, 47, 82, 84 can be provided as grout tubes which are generally understood to comprise tubes filled with tubes.

In particular, the grout tube may have a closure or sealing element at its open upper end, such as a removable cover, to hold the grout within. Thus, when the panels 14, 16, 18, 56, 58, 59 are in-situ, the closure or sealing element can be removed, so that the leg members 30, 72, 82 of the connecting device 2, 4, 6, 60, 62 can be conveniently received into the corresponding grout tubes directly into the settable material. Additional settable material can be added into the void formed by recesses 20, 22, 24, 64, 66, 67 thereafter however much time and labour can be saved on site by omitting the requirement of depositing settable material into the grout tubes after the panels 14, 16, 18, 56, 58, 59 have been erected and before the connecting device has been received. Although the anchor form elements 46, 47, 82, 84 or grout tubes are shown as cylindrical tubular form elements, they may function equally with different cross-sectional shapes such as rectangular, square or octagonal.

In summary, the connecting device 2, 4, 6, 60, 62 is easier and more convenient to use than prior art devices in connecting panel assemblies of two, three or more upright panels 14, 16, 18, 56, 58, 59 and further does not require welding or minimal application of grout at the construction site.

Although in the illustrated embodiments, the leg members, vertical shafts, tubular form elements and hollow tubes of each portion of the connecting device or formwork assembly are shown as pairs, it will be appreciated that the invention can be modified so as to accommodate three or more or any desired number of the following: leg members, vertical shafts, tubular form elements and hollow tubes.

While the connecting devices as shown in the examples above may be used to create assemblies of two, three, four or more panels at a first edge of the panels, it may be understood that further connecting devices can be used to connect panels at other edges of the panels. For example, multiple connecting devices 2 can be used to connect multiple upright panels 14 placed side edge to edge to form a wall of extended length of any length as required. In another example, multiple connecting devices 62 can be used to form a wall of any height or width by connecting vertically and horizontally adjacent panels together.

Furthermore although these examples show the formation of right angled corners, it will be appreciated that the connecting device and corresponding recesses in the panels can be easily modified to accommodate panels connected at different angles other than right angles.

Through-out the specification and claims the word "comprise" and its derivatives is intended to have an inclusive rather than exclusive meaning unless the context requires otherwise.

Orientational terms used in the specification and claims such as vertical, horizontal, top, bottom, upper and lower are to be interpreted as relational and are based on the premise that the component, item, article, assembly, device or instrument will usually be considered in a particular orientation, typically with the assembly uppermost.

It will be appreciated by those skilled in the art that many modifications and variations may be made to the methods of the invention described herein without departing from the scope of the invention as defined by the appended claims.

## Claims

1. A system for connecting an assembly (8, 10, 12, 52, 54) of panels (14, 16, 18, 56, 58, 59), the system comprising:
a plurality of pre-cast concrete panels (14, 16, 18, 56, 58, 59), each pre-cast concrete panel (14, 16, 18, 56, 58, 59) arrangeable in an upright manner and having: an upper edge (50) and a lower edge connecting an integral front face and an integral rear face, at least one of the upper edge (50) or lower edge having at least one recess (20, 22, 24, 64, 66, 67) formed therein, the at least one recess (20, 22, 24, 64, 66, 67) being contained within the upper edge (50) or the lower edge so as not to extend into the front face or rear face of the pre-cast concrete panel (14, 16, 18, 56, 58, 59);
a connecting device (2, 4, 6, 60, 62) for connecting the assembly (8, 10, 12, 52, 54) of adjacent upright pre-cast concrete panels (14, 16, 18, 56, 58, 59), the connecting device (2, 4, 6, 60, 62) comprising:
a body comprising at least two arm members (26, 28, 69), each arm member (26, 28, 69) comprising a plurality of leg members (30, 72, 82) for anchoring the connecting device (2, 4, 6, 60, 62) into the panels (14, 16, 18, 56, 58, 59), each of the arm members (26, 28, 69) and leg members (30, 72, 82) being formed integral to each other thereby forming a single unit for connecting adjacent pre-cast concrete panels (14, 16, 18, 56, 58, 59),
wherein when the pre-cast panels (14, 16, 18, 56, 58, 59) are assembled in an upright, adjacent manner, the connecting device (2, 4, 6, 60, 62) is received in a void formed by the at least one recesses (20, 22, 24, 64, 66, 67) formed in the upper edge (50) or lower edge of the adjacent pre-cast concrete panels (14, 16, 18, 56, 58, 59) thereby joining the adjacent pre-cast concrete panels (14, 16, 18, 56, 58, 59) together at the upper edges (50) or lower edges thereof,
wherein the void comprises a plurality of vertical tubular portions (28, 70, 71), wherein each vertical tubular portion is configured to receive a leg member (30, 72, 82) of the body, wherein the connecting device (2, 4, 6, 60, 62) is wholly receivable within the void and each of the recesses (20, 22, 24, 84, 66, 78) is configured to be filled or pre-filled with a settable material such that such that when the connecting device (2, 4, 6, 60, 62) is received in the recesses (20, 22, 24, 64, 66, 67) of the adjacent pre-cast concrete panels (14, 16, 18, 56, 58) and the settable material has set, the adjacent pre-cast concrete panels (14, 16, 18, 56, 58, 59) are thereby rigidly and fixedly engaged together to such the system is configured to selectively connect an assembly of two, three or more of the pre-cast concrete panels (14, 16, 18, 56, 58, 59) such that when assembled the respective at least one recesses (20, 22, 24, 64, 66, 67) are not visible from a front or rear face of the assembled pre-cast concrete panels (14, 16, 18, 56, 58, 59).

2. The system (8, 10, 12, 52) according to claim 1, wherein the connecting device (2, 4, 6, 60) has a planar upper surface that is configured to be wholly received within the void.

3. The system (8, 10, 12, 52, 54) according to claim 1 or 2, wherein the leg members (30, 72, 82) extend laterally away from the body of the connecting device (2, 4, 6, 60, 62).

4. The system (8, 12, 52, 54) according to any one of the preceding claims, wherein the body of the connecting device (2, 6, 60, 62) further comprises opposing end portions of a beam for connecting a pair of the pre-cast concrete panels (14, 18, 56, 58, 59) positioned edge-to-edge thereby forming a panel (14, 18, 56, 58, 59) of extended dimension.

5. The system (10, 12, 52) according to any one of the preceding claims, wherein at least two arm members (26, 28) of the connecting device (4, 6, 60) are arranged to extend at right angles from one another for forming the assembly (10, 12, 52) of the pre-cast concrete panels (16, 18, 56, 58) having a substantially right angled corner.

6. The system (8, 10, 12, 52, 54) according to any one of the preceding claims, wherein at least one of the arm members (69) of the connecting device (62) has a pair of leg members, wherein each leg member of said pair extends in a direction laterally from the single unit body of the connecting device (62) and is receivable in the recesses (67) of the pre-cast concrete panels (59) where the pre-cast concrete panels (59) are arranged on opposite sides of the arm members (69) of the connecting device (62) thereby connecting the pre-cast concrete panels (59) to form a pre-cast concrete panel (59) of extended dimension.

## Patentansprüche

1. Ein System zum Verbinden einer Anordnung (8, 10, 12, 52, 54) von Platten (14, 16, 18, 56, 58, 59), umfassend:
eine Vielzahl von Betonfertigplatten (14, 16, 18, 56, 58, 59), wobei jede Betonfertigplatte (14, 16, 18, 56, 58, 59) aufrecht anordenbar ist und eine Oberkante (50) und eine Unterkante aufweist, die eine integrale Vorderseite und eine integrale Rückseite verbinden, wobei mindestens eine der Oberkante (50) oder der Unterkante mindestens eine darin ausgebildete Aussparung (20, 22, 24, 64, 66, 67) aufweist, wobei die mindestens eine Aussparung (20, 22, 24, 64, 66, 67) innerhalb der Oberkante (50) oder der Unterkante liegt, um sich nicht in die Vorderseite oder Rückseite der Betonfertigplatte (14, 16, 18, 56, 58, 59) hinein zu erstrecken;
eine Verbindungsvorrichtung (2, 4, 6, 60, 62) zum Verbinden der Anordnung (8, 10, 12, 52, 54) benachbarter, aufrechtstehender Betonfertigplatten (14, 16, 18, 56, 58, 59), wobei die Verbindungsvorrichtung (2, 4, 6, 60, 62) umfasst:
einen Körper mit mindestens zwei Armelementen (26, 28, 69), wobei jedes Armelement (26, 28, 69) eine Vielzahl von Schenkelelementen (30, 72, 82) zur Verankerung der Verbindungsvorrichtung (2, 4, 6, 60, 62) in den Platten (14, 16, 18, 56, 58, 59) umfasst, wobei jedes der Armelemente (26, 28, 69) und der Schenkelelemente (30, 72, 82) jeweils integral miteinander ausgebildet ist und dadurch eine einzige Einheit zum Verbinden benachbarter Betonfertigplatten (14, 16, 18, 56, 58, 59) ausbilden,
wobei die Verbindungsvorrichtung (2, 4, 6, 60, 62), wenn die Betonfertigplatten (14, 16, 18, 56, 58, 59) in aufrechter, benachbarter Weise montiert werden, in einem Hohlraum aufgenommen wird, der durch die mindestens eine Aussparung (20, 22, 24, 64, 66, 67) gebildet ist, die in der Oberkante (50) oder Unterkante der benachbarten Betonfertigplatten (14, 16, 18, 56, 58, 59) ausgebildet ist, wodurch die benachbarten Betonfertigplatten (14, 16, 18, 56, 58, 59) an ihren Oberkanten (50) oder Unterkanten miteinander verbunden werden,
wobei der Hohlraum eine Vielzahl von vertikalen röhrenförmigen Abschnitten (28, 70, 71) umfasst, wobei jeder vertikale röhrenförmige Abschnitt dazu eingerichtet ist, ein Schenkelement (30, 72, 82) des Körpers aufzunehmen, wobei die Verbindungsvorrichtung (2, 4, 6, 60, 62) vollständig in den Hohlraum aufnehmbar ist und jede der Aussparungen (20, 22, 24, 84, 66, 78) dazu eingerichtet ist, mit einem aushärtbaren Material ausgefüllt zu werden oder vorausgefüllt zu sein, sodass, wenn die Verbindungsvorrichtung (2, 4, 6, 60, 62) in den Aussparungen (20, 22, 24, 64, 66, 67) der benachbarten Betonfertigplatten (14, 16, 18, 56, 58) aufgenommen ist und das aushärtbare Material ausgehärtet ist, die benachbarten Betonfertigplatten (14, 16, 18, 56, 58, 59) dadurch starr und fest miteinander verbunden werden, sodass das System derart eingerichtet ist, eine Anordnung aus zwei, drei oder mehr Betonfertigplatten (14, 16, 18, 56, 58, 59) selektiv zu verbinden, sodass im zusammengebauten Zustand die jeweils mindestens eine Aussparung (20, 22, 24, 64, 66, 67) von einer Vorderseite oder Rückseite der zusammengebauten Betonfertigplatten (14, 16, 18, 56, 58, 59) nicht sichtbar ist.

2. Das System (8, 10, 12, 52) nach Anspruch 1, wobei die Verbindungsvorrichtung (2, 4, 6, 60) eine ebene Oberseite aufweist, die dazu eingerichtet ist, vollständig in dem Hohlraum aufgenommen zu werden.

3. Das System (8, 10, 12, 52, 54) nach Anspruch 1 oder 2, wobei die Schenkelelemente (30, 72, 82) seitlich von dem Körper der Verbindungsvorrichtung (2, 4, 6, 60, 62) wegragen.

4. Das System (8, 12, 52, 54) nach einem der vorhergehenden Ansprüche, wobei der Körper der Verbindungsvorrichtung (2, 6, 60, 62) ferner gegenüberliegende Endabschnitte eines Balkens zum Verbinden eines Paars der Betonfertigplatten (14, 18, 56, 58, 59) umfasst, die Kante an Kante positioniert sind, wodurch eine Platte (14, 18, 56, 58, 59) mit erweiterten Abmessungen gebildet wird.

5. Das System (10, 12, 52) nach einem der vorhergehenden Ansprüche, wobei mindestens zwei Armelemente (26, 28) der Verbindungsvorrichtung (4, 6, 60) rechtwinklig zueinander verlaufend angeordnet sind, um die Anordnung (10, 12, 52) der Betonfertigplatten (16, 18, 56, 58) mit einer im Wesentlichen rechtwinkligen Ecke zu bilden.

6. Das System (8, 10, 12, 52, 54) nach einem der vorhergehenden Ansprüche, wobei mindestens eines der Armelemente (69) der Verbindungsvorrichtung (62) ein Paar Schenkelelemente aufweist, wobei sich jedes Schenkelelement des Paars in eine Richtung seitlich von dem einzelnen Körper der Verbindungsvorrichtung (62) erstreckt und in den Aussparungen (67) der Betonfertigplatten (59) aufnehmbar ist, wobei die Betonfertigplatten (59) auf gegenüberliegenden Seiten der Armelemente (69) der Verbindungsvorrichtung (62) angeordnet sind, wodurch die Betonfertigplatten (59) verbunden werden, um eine Betonfertigplatte (59) mit erweiterten Abmessungen zu bilden.

## Revendications

1. Système de liaison d'un ensemble (8, 10, 12, 52, 54) de panneaux (14, 16, 18, 56, 58, 59), le système comprenant :
une pluralité de panneaux de béton préfabriqués (14, 16, 18, 56, 58, 59), chaque panneau de béton préfabriqué (14, 16, 18, 56, 58, 59) pouvant être agencé de manière verticale et ayant : un bord supérieur (50) et un bord inférieur reliant une face avant intégrale et une face arrière intégrale, au moins l'un du bord supérieur (50) ou du bord inférieur ayant au moins un évidement (20, 22, 24, 64, 66, 67) formé dans celui-ci, l'au moins un évidement (20, 22, 24, 64, 66, 67) étant contenu dans le bord supérieur (50) ou le bord inférieur de manière à ne pas s'étendre dans la face avant ou la face arrière du panneau de béton préfabriqué (14, 16, 18, 56, 58, 59) ;
un dispositif de liaison (2, 4, 6, 60, 62) pour relier l'ensemble (8, 10, 12, 52, 54) de panneaux de béton préfabriqués verticaux adjacents (14, 16, 18, 56, 58, 59), le dispositif de liaison (2, 4, 6, 60, 62) comprenant :
un corps comprenant au moins deux éléments de bras (26, 28, 69), chaque élément de bras (26, 28, 69) comprenant une pluralité d'éléments de patte (30, 72, 82) pour ancrer le dispositif de liaison (2, 4, 6, 60, 62) dans les panneaux (14, 16, 18, 56, 58, 59), les éléments de bras (26, 28, 69) et les éléments de patte (30, 72, 82) étant chacun formés solidairement les uns des autres, formant ainsi une unité unique pour relier des panneaux de béton préfabriqués adjacents (14, 16, 18, 56, 58, 59),
où, lorsque les panneaux préfabriqués (14, 16, 18, 56, 58, 59) sont assemblés de manière verticale adjacente, le dispositif de liaison (2, 4, 6, 60, 62) est reçu dans un vide formé par l'au moins un évidement (20, 22, 24, 64, 66, 67) formé dans le bord supérieur (50) ou le bord inférieur des panneaux de béton préfabriqués adjacents (14, 16, 18, 56, 58, 59) reliant ainsi les panneaux de béton préfabriqués adjacents (14, 16, 18, 56, 58, 59) ensemble au niveau des bords supérieurs (50) ou des bords inférieurs de ceux-ci,
où le vide comprend une pluralité de parties tubulaires verticales (28, 70, 71), où chaque partie tubulaire verticale est configurée pour recevoir un élément de patte (30, 72, 82) du corps, où le dispositif de liaison (2, 4, 6, 60, 62) peut être entièrement reçu dans le vide et chacun des évidements (20, 22, 24, 84, 66, 78) est configuré pour être rempli ou pré-rempli d'un matériau durcissable de sorte que lorsque le dispositif de liaison (2, 4, 6, 60, 62) est reçu dans les évidements (20, 22, 24, 64, 66, 67) des panneaux de béton préfabriqués adjacents (14, 16, 18, 56, 58) et le matériau durcissable a durci, les panneaux de béton préfabriqués adjacents (14, 16, 18, 56, 58, 59) soient ainsi engagés de manière rigide et fixe ensemble pour que le système soit configuré pour relier sélectivement un ensemble de deux, trois ou plus des panneaux de béton préfabriqués (14, 16, 18, 56, 58, 59) de sorte que lorsqu'ils sont assemblés l'au moins un évidement respectif (20, 22, 24, 64, 66, 67) ne soient pas visibles depuis une face avant ou arrière des panneaux de béton préfabriqués assemblés (14, 16, 18, 56, 58, 59).

2. Système (8, 10, 12, 52) selon la revendication 1, dans lequel le dispositif de liaison (2, 4, 6, 60) a une surface supérieure plane qui est configurée pour être entièrement reçue dans le vide.

3. Système (8, 10, 12, 52, 54) selon la revendication 1 ou 2, dans lequel les éléments de patte (30, 72, 82) s'étendent latéralement loin du corps du dispositif de liaison (2, 4, 6, 60, 62).

4. Système (8, 12, 52, 54) selon l'une quelconque des revendications précédentes, dans lequel le corps du dispositif de liaison (2, 6, 60, 62) comprend en outre des parties d'extrémité opposées d'une poutre pour relier une paire de panneaux de béton préfabriqués (14, 18, 56, 58, 59) positionnés bord à bord, formant ainsi un panneau (14, 18, 56, 58, 59) de dimension étendue.

5. Système (10, 12, 52) selon l'une quelconque des revendications précédentes, dans lequel au moins deux éléments de bras (26, 28) du dispositif de liaison (4, 6, 60) sont agencés pour s'étendre à angles droits l'un par rapport à l'autre afin de former l'ensemble (10, 12, 52) des panneaux de béton préfabriqués (16, 18, 56, 58) ayant un coin à angle sensiblement droit.

6. Système (8, 10, 12, 52, 54) selon l'une quelconque des revendications précédentes, dans lequel au moins l'un des éléments de bras (69) du dispositif de liaison (62) a une paire d'éléments de patte, où chaque élément de patte de ladite paire s'étend dans une direction latéralement depuis le corps d'unité unique du dispositif de liaison (62) et peut être reçu dans les évidements (67) des panneaux de béton préfabriqués (59) où les panneaux de béton préfabriqués (59) sont agencés sur les côtés opposés des éléments de bras (69) du dispositif de liaison (62), reliant ainsi les panneaux de béton préfabriqués (59) pour former un panneau de béton préfabriqué (59) de dimension étendue.
